**Europäisches Patentamt**

**European Patent Office**

**Office européen des brevets**

(19)

(11) Veröffentlichungsnummer: **0 223 957**
**B1**

(12) **EUROPÄISCHE PATENTSCHRIFT**

(45) Veröffentlichungstag der Patentschrift:
16.05.90

(51) Int. Cl.⁵: **H04N 1/028**

(21) Anmeldenummer: **86113001.1**

(22) Anmeldetag: **20.09.86**

(54) **Optoelektronischer Abtastkopf.**

(30) Priorität: **24.10.85  DE 3537857**

(43) Veröffentlichungstag der Anmeldung:
**03.06.87 Patentblatt 87/23**

(45) Bekanntmachung des Hinweises auf die Patenterteilung:
**16.05.90 Patentblatt 90/20**

(84) Benannte Vertragsstaaten:
**AT BE CH DE FR GB IT LI NL SE**

(56) Entgegenhaltungen:
**EP-A- 0 177 461**
**DE-A- 3 500 129**
**DE-A- 3 509 228**
**GB-A- 2 152 326**

(73) Patentinhaber: **DR.-ING. RUDOLF HELL GmbH,
Grenzstrasse 1-5, D-2300 Kiel 14(DE)**

(72) Erfinder: **Andree, Klaus, Postfelder Weg 27a,
D-2308 Preetz(DE)**
Erfinder: **Balzeit, Ralf, Feldstrasse 2, D-2308 Preetz(DE)**
Erfinder: **Parl, Ulrich, Preetzer Strasse 51,
D-2301 Raisdorf(DE)**
Erfinder: **Rebetge, Lutz, Starnberger Strasse 73a,
D-2300 Kiel 14(DE)**

## Beschreibung

Die vorliegende Erfindung bezieht sich auf das Gebiet der elektronischen Reproduktionstechnik und betrifft einen optoelektronischen Abtastkopf für Trommel- oder Flachbett-Abtastgeräte zur punkt- und zeilenweisen Abtastung von Aufsichts- und Durchsichtsvorlagen.

Bei einem Trommel-Abtastgerät wird die zu reproduzierende Vorlage auf eine Abtasttrommel als Vorlagenträger aufgespannt und von einem optoelektronischen Abtastkopf, der sich axial an der rotierenden Abtasttrommel entlang bewegt, punkt- und zeilenweise abgetastet. Der Abtastkopf enthält im wesentlichen ein Abtastobjektiv, eine Blende und einen optoelektronischen Wandler. Die Vorlage wird punktweise beleuchtet, und das von dem Beleuchtungsfleck auf der Vorlage ausgehende, mit dem Informationsinhalt der Vorlage modulierte Abtastlicht gelangt durch das Abtastobjektiv und die Blende auf den optoelektronischen Wandler, welcher das Abtastlicht in ein elektrisches Bildsignal umwandelt. Bei der Abtastung von Durchsichts-Vorlagen befindet sich das Beleuchtungssystem im Inneren der aus einem transparenten Material bestehenden Abtasttrommel, und das durch die Durchsichts-Vorlage hindurchgelassene Abtastlicht gelangt in den Abtastkopf, wobei Beleuchtungssystem und Abtastkopf synchron in Axialrichtung der Abtasttrommel bewegt werden. Bei der Abtastung von Aufsichts-Vorlagen ist das Beleuchtungssystem dagegen Bestandteil des Abtastkopfes, und das von der Aufsichts-Vorlage reflektierte Abtastlicht wird im Abtastkopf ausgewertet. Bei einem Flachbett-Abtastgerät ist der Vorlagenträger eine ebene Fläche.

Um die Vorlagen mit optimaler Bildschärfe abzutasten, muß der Schärfebereich des Abtastobjektivs in der Bildebene der Vorlagen liegen, bzw. es muß der Abstand Bildebene/Abtastobjektiv stets konstant sein. Nun müssen aber Vorlagen mit unterschiedlicher Dicke oder Stärke abgetastet werden, und die verwendeten Abtasttrommeln weisen fertigungsbedingte Durchmesser-Toleranzen auf, so daß die Bildschärfe immer wieder kontrolliert und gegebenenfalls korrigiert werden muß.

Bei herkömmlichen Abtastköpfen ist die Korrektur der Bildschärfe nur begrenzt möglich, da sich die Abtastobjektive entlang ihrer optischen Achse nur in einem engen Bereich verschieben lassen, der aber nicht ausreicht, um für alle vorkommenden Vorlagen-Stärken eine optimale Einstellung der Bildschärfe und damit eine gute Abtastqualität zu erreichen. Um diesen Nachteil zu beheben, hat man schon verschiedene Abtasttrommeln bereitgestellt, deren Radius-Differenzen den am häufigsten vorkommenden Vorlagen-Stärken entsprechen. Dadurch konnte zwar jeweils der Abstand Bildebene/Abtastobjektiv nahezu konstant gehalten werden, diese Maßnahme ist aber sehr aufwendig.

Aus der älteren aber nicht vorveröffentlichten Druckschrift EP-A2 0 177 461 ist bereits ein optoelektronischer Abtastkopf bekannt, der aus einem ortsfesten Gehäuseteil mit optoelektronischer Wandlereinrichtung und einem beweglichen Gehäuseteil mit Abtastobjektiv und Beleuchtungssystem besteht. Das bewegliche Gehäuseteil läßt sich, geführt von Langlöchern, manuell entlang der optischen Achse des Abtastobjektivs verschieben und dann in der gewünschten Position mit Hilfe von Schrauben fixieren. Damit läßt sich keine genaue und feinfühlige Einstellung der Bildschärfe und der Abtastbeleuchtung erzielen wie sie für eine gute Reproduktionsqualität erforderlich ist.

Der vorliegenden Erfindung liegt dahe die Aufgabe zugrunde, einen optoelektronischen Abtastkopf zur Abtastung von Durchsichts- und Aufsichtsvorlagen anzugeben, mit dem der Abstand des Abtastobjektivs und des Beleuchtungssystems zur Oberfläche der abzutastenden Vorlagen für einen breiten Bereich von Vorlagenstärken schnell, feinfühlig und genau einstellbar ist, um jeweils eine optimale Justierung der Bildschärfe und des Beleuchtungsflecks zu erreichen.

Diese Aufgabe wird durch die im kennzeichnenden Teil des Patentanspruchs 1 angegebenen Merkmale gelöst. Die Unteransprüche betreffen vorteilhafte konstruktive Ausgestaltungen des Abtastkopfes.

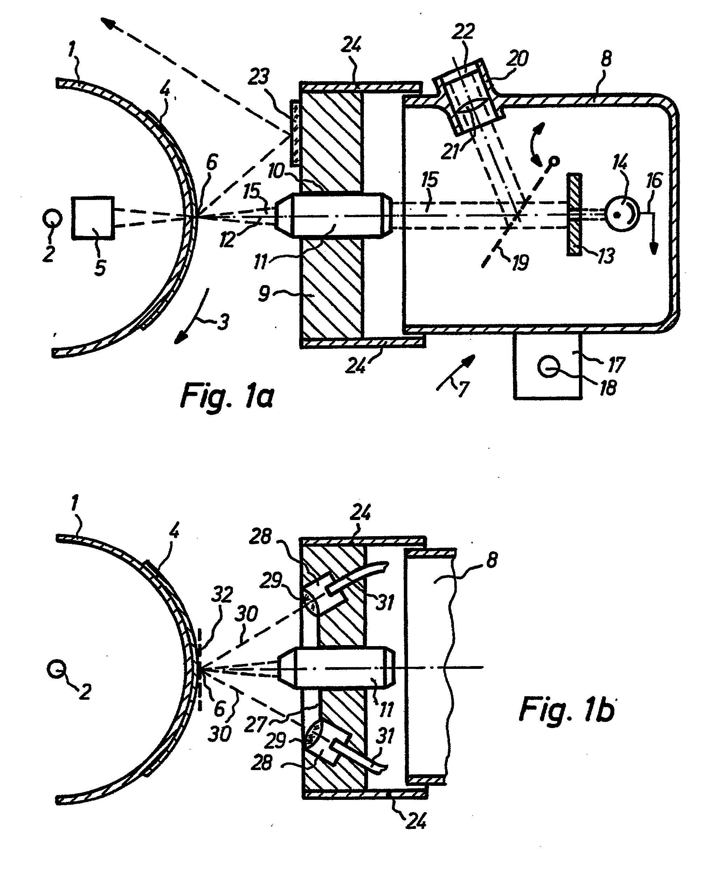

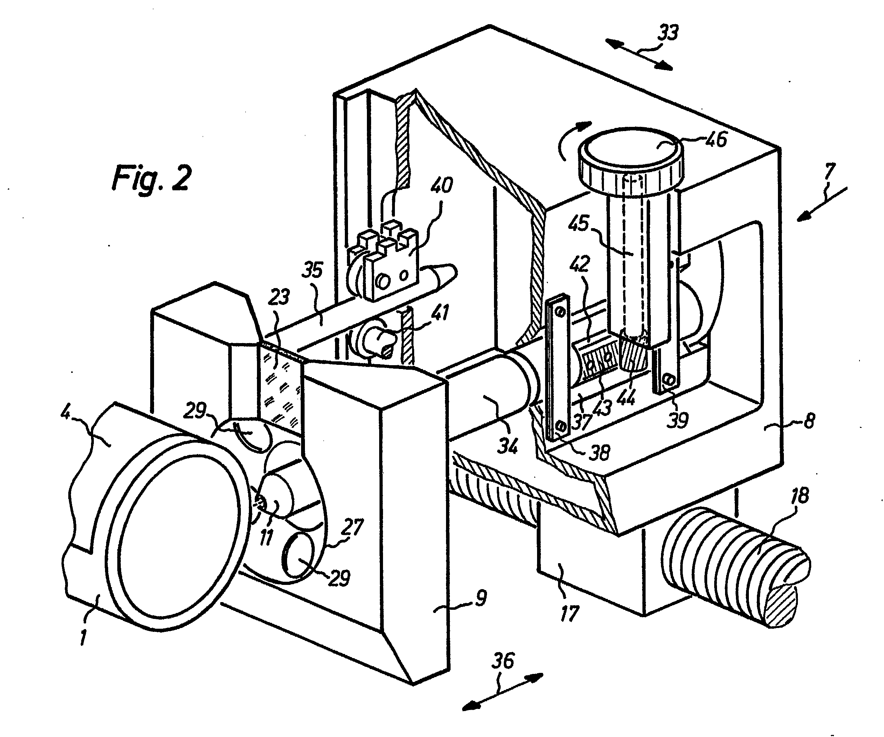

Die Erfindung wird am Beispiel eines Trommel-Abtastgerätes anhand der Fig. 1 und 2 näher erläutert.
Es zeigen:
Fig. 1 Schnittbilder durch den Abtastkopf; und
Fig. 2 eine perspektivische Darstellung eines Abtastkopfes.

Die Fig. 1a und 1b zeigen zur prinzipiellen Erläuterung der Erfindung Radial-Schnittbilder durch einen Teil einer Abtasttrommel eines nicht näher dargestellten Trommel-Abtastgerätes sowie entsprechende Schnittbilder durch einen Abtastkopf entlang einer optischen Achse.

In Fig. 1a sind die Schnittbilder für Durchsichts-Abtastung dargestellt. Der Vorlagenträger ist eine aus einem transparenten Material gefertigte Abtasttrommel 1, die um eine senkrecht zur Zeichenebene verlaufende Achse 2 in Richtung eines Pfeiles 3 rotiert. Auf diese Abtasttrommel 1 ist die abzutastende Durchsichts-Vorlage 4 aufgespannt. Ein nicht im einzelnen ausgeführtes, bewegliches Beleuchtungssystem 5 im Inneren der Abtasttrommel 1 erzeugt in der Bildebene der Durchsichts-Vorlage 4 einen Beleuchtungsfleck 6, durch den die Durchsichts-Vorlage 4 aufgrund einer Bewegung des Beleuchtungssystems 5 in Richtung der Achse 2 und aufgrund der Rotation der Abtasttrommel 1 punkt- und zeilenweise beleuchtet wird. Der Abtastkopf 7 des Trommel-Abtastgerätes besteht im wesentlichen aus einem in Richtung der Abtasttrommel 1 offenen Gehäuse 8 und aus einer der Abtasttrommel 1 zugewandten Frontplatte 9. Die Frontplatte 9 des Abtastkopfes 7 weist eine Bohrung auf, in der ein Abtastobjektiv 11 angeordnet und fest mit der Frontplatte 9 verbunden ist. Die optische Achse 12 des Abtastobjektivs 11 verläuft in Radialrichtung der Abtasttrommel 1. Im Gehäuse 8 des Abtastkopfes 7 befinden sich im Strahlengang des Abtastobjektivs ll entlang der optischen Achse l2 eine Bildpunkt-Blende l3 und ein optoelektronischer Wand-

ler 14, welche in geeigneter Weise am Gehäuse 8 befestigt sind.

Das von dem Beleuchtungsfleck 6 auf der Durchsichts-Vorlage 4 ausgehende und mit dem Informationsinhalt der Durchsichts-Vorlage 4 modulierte Abtastlichtbündel 15 wird durch das Abtastobjektiv 11 auf die Bildpunkt-Blende 13 projiziert. Die Bildpunkt-Blende 13 begrenzt das Abtastlichtbündel 15 derart, daß nur das von dem eigentlichen Bildpunkt innerhalb des Beleuchtungsflecks 6 ausgehende Abtastlicht auf den optoelektronischen Wandler 14 fällt und dort in ein elektrisches Bildsignal auf einer Leitung 16 umgewandelt wird.

Die Frontplatte 9 des Abtastkopfes 7 ist durch einen in Fig. la nicht dargestellten Verschiebemechanismus derart mit dem Gehäuse 8 verbunden, daß die Frontplatte 9 einschließlich Abtastobjektiv 11 gegenüber dem Gehäuse 8 in Richtung der optischen Achse 12 in einem großen Bereich verschiebbar ist. Dadurch läßt sich der Schärfebereich des Abtastobjektivs 11 stets in die Bildebene der momentan abzutastenden Vorlage verlegen, wodurch für alle vorkommenden Vorlagen-Stärken optimale Bildschärfe und damit eine hohe Abtastqualität erreicht wird.

Am Boden des Gehäuses 8 ist eine Transportmutter 17 angebracht, die in eine parallel zur Achse 2 der Abtasttrommel 1 ausgerichteten Vorschubspindel 18 eingreift. Durch die Rotation der Vorschubspindel 18 wird das Gehäuse 8 des Abtastkopfes 7 in einem gerätespezifischen konstanten Abstand und die Frontplatte 9 bzw. das Abtastobjektiv 11 in dem jeweils eingestellten Abstand in axialer Richtung an der Mantelfläche der Abtasttrommel 1 vorbeigeführt.

In das aus dem Abtastobjektiv 11 austretende Abtastlichtbündel 15 läßt sich ein gestrichelt angedeuteter Kippspiegel einschwenken, der das Abtastlichtbündel 15 in Richtung eines Einblicktubus' 20 mit Lupe 21 und Mattscheibe 22 im Gehäuse 8 reflektiert. Dadurch erscheint auf der Mattscheibe 22 eine vergrößerte Abbildung des momentan abgetasteten Bildpunktes und seiner unmittelbaren Umgebung, wodurch die Einstellung der Bildschärfe wesentlich erleichtert wird.

Bei den meisten Trommel-Abtastgeräten befindet sich der Abtastkopf 7 - von der Bedienungsseite des Gerätes aus gesehen - hinter der Abtasttrommel 1, so daß es für die Bedienungsperson oft schwierig ist, die momentan vom Abtastkopf 7 erfaßte Vorlagenstelle auf der Rückseite der Abtasttrommel 1 zu betrachten oder den Abtastkopf 7 zwecks einer Geräteeichung auf markante Vorlagenpunkte einzustellen. Aus diesem Grunde ist an der Frontplatte 9 oberhalb des Abtastobjektivs 11 ein Spiegel 23 angebracht, durch den die Bedienungsperson problemlos die jeweilige Bildpunktumgebung auf der Durchsichts-Vorlage 4 betrachten und beurteilen kann.

An der Frontplatte 9 ist noch eine Abdeckhaube 24 angebracht, die über die offene Seite des Gehäuses 8 greift und den Innenraum des Gehäuses 8 vor Fremdlichteinfall schützt.

In Fig. lb sind die entsprechenden Schnittbilder für Aufsichts-Abtastung dargestellt, die sich im wesentlichen gegenüber den in Fig. la gezeigten Schnittbildern darin unterscheiden, daß das Beleuchtungssystem sich nicht mehr im Inneren der Abtasttrommel 1 befindet, sondern Bestandteil des Abtastkopfes 7 ist. Die Frontplatte 9 ist zusätzlich mit einer symmetrisch zur optischen Achse 12 des Abtastobjektivs 11 liegenden konischen Aussparung 27 versehen. Die Seitenwand der Aussparung 27 weist eine Anzahl von um das Abtastobjektiv 11 verteilten Bohrungen 28 auf, von denen im Schnittbild lediglich zwei sichtbar sind. In den Bohrungen 28 sind Beleuchtungsoptiken oder Kondensoren 29 des Beleuchtungssystems angeordnet, die bei der Montage des Abtastkopfes 7 einmalig so ausgerichtet werden, daß ihre optischen Achsen 30 durch den Schärfebereich des Abtastobjektivs 11 verlaufen. Das von einer nicht dargestellten Lichtquelle des Beleuchtungssystems erzeugte Beleuchtungslicht wird über Lichtleitkabel 31 zu den einzelnen Kondensoren 29 transportiert und von diesen in einem scharfen Beleuchtungspunkt 6 in der Schärfe-Ebene 32 des Abtastobjektivs 11 überlagert. Da die Lage der optischen Achsen 12 und 30 zueinander beim Verschieben der Frontplatte 9 erhalten bleibt, "sieht" das Abtastobjektiv 11 - unabhängig von der Stellung der Frontplatte 9 - stets einen scharfen Beleuchtungsfleck 6. Wird nun der Schärfebereich des Abtastobjektivs 11 in die Bildebene der momentan abzutastenden Aufsichts-Vorlage verlegt, so wird in vorteilhafter Weise eine optimale Ausleuchtung der Vorlage und eine optimale Bildschärfe erreicht.

Die Erfindung ist nicht auf das beschriebene Ausführungsbeispiel beschränkt. Der Abtastkopf kann auch bei Flachbett-Abtastgeräten Anwendung finden. In diesem Falle ist der Vorlagenträger eine ebene Fläche, die sich relativ zum Abtastkopf bewegt, und der Abtastkopf enthält anstelle eines einzelnen diskreten optoelektronischen Wandlers eine Fotodioden-Zeile oder -Matrix zur Umwandlung des Abtastlichtes. Das beim Abtastkopf für Aufsichts-Abtastung beschriebene Beleuchtungssystem kann in jeder Form modifiziert werden. Der erfindungsgemäße Abtastkopf kann selbstverständlich auch noch zusätzliche Einrichtungen zur elektronischen Unscharfmaskierung und/oder zur Abtastung von Farbvorlagen enthalten.

Fig. 2 zeigt eine perspektivische Darstellung von Abtasttrommel 1 und Abtastkopf 7 für Aufsichts-Abtastung, anhand der die konstruktive Ausgestaltung des bereits erwähnten Verschiebemechanismus' zwischen Gehäuse 8 und Frontplatte 9 erläutert werden soll. Auf der Abtasttrommel 1 ist die abzutastende Aufsichts-Vorlage 4 angeordnet. An der Vorderseite der Frontplatte 9 ist das Abtastobjektiv 11, die konische Aussparung 27 sowie die um das Abtastobjektiv 11 gruppierten Kondensoren 29 des Beleuchtungssystems und der Spiegel 23 sichtbar. Am Gehäuse 8 befindet sich die Transportmutter 17, die in die Abtastspindel 18 eingreift, um den Abtastkopf 7 in Richtung eines Pfeiles 33 axial an der Abtasttrommel 1 entlang zu bewegen. An der Frontplatte 9 sind zwei senkrecht zur Frontplatte 9 und parallel zueinander stehende Führungsstangen 34 und 35 befestigt. Die Führungsstangen 34 und 35 ragen in das Gehäuse 8 hinein und sind dort derart verschiebbar geführt bzw. gelagert, daß der Abstand der Frontplatte 9 und des Abtastobjektivs II zur Abtasttrommel I in der durch einen Pfeil 36 angedeuteten Radialrichtung verstellbar ist. Ein Teil der Gehäusewand ist in Radialrichtung als Führungsnut 37 für die Führungsstange 34 ausgebildet und mit einem geeigneten Gleitmaterial ausgelegt. Die Führungsstange 34 ist durch zwei Federn 38 und 39 in der Führungsnut 37 gleitend und spielfrei gelagert. Die andere Führungsstange 35 bewegt sich zwischen zwei am Gehäuse 8 befestigten Rollenlagern 40 und 4I. Die Führungsstange 34 dient als Antriebselement für die Verstellung der Frontplatte 9. Dazu weist die Führungsstange 34 im Bereich der Führungsnut 37 eine in Längsrichtung verlaufende rechteckförmige Aussparung 42 an der Oberfläche auf. In diese Aussparung 42 ist eine Zahnstange 43 eingelassen, deren Länge die maximal mögliche Verstellung der Frontplatte 9 bestimmt. In diese Zahnstange 43 greift ein senkrecht zur Verschieberichtung ausgerichtetes Ritzel 44 ein, das über eine im Gehäuse 8 gelagerte Welle 45 mit einem Knopf 46 verbunden ist. Durch Drehung des Knopfes 46 bzw. des Ritzels 44 führt die Zahnstange 43 eine entsprechende geradlinige Verschiebung in Richtung des Pfeils 36 aus, die über die Führungsstange 34 auf die Frontplatte 9 übertragen wird. Durch Wahl einer geeigneten Steigung für Zahnstange 43 und Ritzel 44 wird in vorteilhafter Weise eine feinfühlige Verstellung ermöglicht.

## Patentansprüche

1. Obtoelektronischer Abtastkopf zur punkt- und zeilenweisen Abtastung von auf einem Vorlagenträger angeordneten Vorlagen, bestehend aus:

a) einem Abtastsystem mit einem Abtastobjektiv (11), einer Blende (13) und mindestens einem optoelektronischen Wandler (14), welche entlang der optischen Achse (12) des Abtastobjektivs (11) angeordnet sind,

b) einem dem Vorlagenträger (1) zugewandten, entlang der optischen Achse (12) verschiebbaren Gehäuseteil (9), in dem das Abtastobjektiv (11) angeordnet und mit diesem verbunden ist und

c) einem vom Vorlagenträger (1) abgewandten und in bezug auf die optische Achse (12) ortsfesten Gehäuseteil (8), in dem die Blende (13) und der optoelektronische Wandler (14) angeordnet sind, dadurch gekennzeichnet, daß zur schnellen und genauen Veränderung des Abstandes des Abtastobjektivs (11) zur Oberfläche des Vorlagenträgers (1)

d) am verschiebbaren Gehäuseteil (9) zwei in Richtung der optischen Achse (12) und parallel zueinander verlaufende Führungsstangen (34; 35) befestigt sind, welche in das ortsfeste Gehäuseteil (8) ragen,

e) in dem ortsfesten Gehäuseteil (8) ein Gleitlager (37; 38; 39) zur gleitenden und spielfreien Lagerung einer der Führungsstangen (34; 35) und ein Rollenlager (40; 41) zur Führung der anderen Führungsstange (34; 35) angeordnet sind,

f) an der im Gleitlager (37; 38; 39) geführten Führungsstange (34; 35) eine in Richtung der optischen Achse (12) verlaufende Zahnstange (43) befestigt ist,

g) ein senkrecht zur optischen Achse (12) drehbares Ritzel (44) vorgesehen ist, welches in die Zahnstange (42) eingreift, und

h) eine in dem ortsfesten Gehäuseteil (8) drehbar gelagerte Welle (45) vorhanden ist, an deren einem Ende das Ritzel (44) und an deren anderem Ende ein Knopf (46) befestigt ist, wobei durch Drehen des Knopfes (46) eine entsprechende Veränderung des Abstandes des Abtastobjektivs (11) zur Oberfläche des Vorlagenträgers (1) bewirkt wird.

2. Abtastkopf nach Anspruch 1, dadurch gekennzeichnet, daß das Gleitlager (37; 38; 39) aus einer mit einer Gleitfolie ausgekleideten Führungsnut (37) im ortsfesten Gehäuseteil (8) und aus Blattfedern (38; 39) zur Fixierung der Führungsstangen (34; 35) in der Führungsnut (37) besteht.

3. Abtastkopf nach Anspruch 1 oder 2, dadurch gekennzeichnet, daß zur Abtastung von Aufsichts-Vorlagen an dem verschiebbaren Gehäuseteil (9) mindestens eine Lichtquelle (29) befestigt und derart zu dem Abtastobjektiv (11) ausgerichtet ist, daß der Schnittpunkt der optischen Achse (30) der Lichtquelle (29) mit der optischen Achse (12) im Schärfebereich des Abtastobjektivs (11) liegt.

4. Abtastkopf nach einem der Ansprüche 1–3, dadurch gekennzeichnet, daß an der dem Vorlagenträger (1) zugewandten Seite des verschiebbaren Gehäuseteils (9) oberhalb des Abtastobjektivs (11) ein Spiegel (23) angebracht ist.

## Claims

1. An opto-electronic scanning head for the point-by-point and line-by-line scanning of the original copies arranged on an original-copy support consisting of:

a) a scanning system with a scanning objective (11), a diaphragm (13) and at least one opto-electronic transducer (14), which are arranged along the optical axis (12) of the scanning objective (11),

b) a housing part (9) facing the original-copy support (1) and displaceable along the optical axis (12), in which the scanning objective (11) is arranged and is connected thereto and

c) a housing part (8), remote from the original-copy support (1) and stationary with respect to the optical axis (12), in which the diaphragm (13) and the opto-electronic transducer (14) are arranged, characterised in that for the rapid and accurate variation of the distance of the scanning objective (11) from the surface of the original-copy support (1)

d) two guide rods (34; 35) extending in direction of the optical axis (12) and parallel to one another, and which project into the stationary housing part (8), are fastened to the displaceable housing part (9),

e) a sliding bearing (37; 38; 39) for the sliding and playfree mounting of one of the guide rods (34; 35) and a roller bearing (40; 41) for the guidance of the other guide rod (34; 35) are arranged in the stationary housing part (8),

f) a rack (43) extending in the direction of the optical axis (12) is fastened to the guide rod (34; 35) which is guided in the sliding bearing (37; 38; 39),

g) a pinion (44) rotatable perpendicular to the optical axis (12) is provided, which engages into the rack (42), and

h) a shaft (45), rotatably mounted in the stationary housing part (8), is present, to the one end of which the pinion (44) and on the other end of which a knob (46) is fastened, whereby by rotating the knob (46) a corresponding variation of the distance of the scanning objective (11) from the surface of the original-copy support (1) is brought about.

2. A scanning head according to claim 1, characterised in that the sliding bearing (37; 38; 39) consists of a guide groove (37), lined with a sliding foil, in the stationary housing part (8) and of leaf springs (38; 39) for fixing the guide rods (34; 35) in the guide groove (37).

3. A scanning head according to claim 1 or 2, characterised in that for the scanning of opaque originals at least one light source (29) is fastened to the displaceable housing part (9) and is aligned in such a way with regard to the scanning objective (11) that the point of intersection of the optical axis (30) of the light source (29) with the optical axis (12) lies in the sharp definition region of the scanning objective (11).

4. A scanning head according to one of claim 1 to 3, characterised in that a mirror (23) is installed above the scanning objective (11) on the side of the displaceabel housing part (9) which faces the original-copy support (1).

## Revendications

1. Tête opto-électronique d'exploration pour l'exploration par points et par lignes de modèles disposés sur un support de modèles, cette tête d'exploration étant constituée par:

a) un système d'exploration avec un objectif d'exploration (11), un diaphragme (13), et au moins un convertisseur opto-électronique (14), qui sont disposés le long de l'axe optique (12) de l'objectif d'exploration (11),

b) une partie de boîtier (9) tournée vers le support de modèles (1) et susceptible de se déplacer le long de l'axe optique (12), partie de boîtier dans laquelle est disposé, en étant relié avec elle, l'objectif d'exploration (11),

c) une partie de boîtier (8) opposée au support de modèles (1) et fixe par rapport à l'axe optique (12), dans laquelle sont disposés le diaphragme (13) et le convertisseur opto-électronique (14), tête d'exploration caractérisée en ce que pour modifier rapidement et de façon précise la distance entre l'objectif d'exploration (11) et la surface du support de modèles (1),

d) sur la partie de boîtier (9) susceptible de se déplacer sont fixées deux tiges de guidage (34; 35) s'étendant en direction de l'axe optique (12) et parallèlement entre elles, et qui pénètrent dans la partie de boîtier fixe (8),

e) dans la partie de boîtier fixe (8) sont disposés un palier lisse (37; 38; 39) pour le montage sans jeu et permettant le glissement de l'une des tiges de guidage (34; 35) et deux paliers à rouleaux (40; 41) pour le guidage de l'autre tige de guidage (34; 35),

f) sur la tige de guidage (34; 35) guidée dans le palier lisse (37; 38; 39) est fixée une crémaillère (43) s'étendant en direction de l'axe optique (12), g) il est prévu un pignon (44) susceptible de tourner sur un axe perpendiculaire à l'axe optique (12), ce pignon venant en prise sur la crémaillère (42),

h) il est prévu un arbre (45) monté de façon à pouvoir tourner dans la partie fixe (8) du boîtier, arbre à une extrémité duquel est fixé le pignon (44) tandis qu'à l'autre extrémité est fixé un bouton (46), la rotation de ce bouton (46) provoquant une modification correspondante de la distance entre l'objectif d'exploration (1) et la surface du support de modèle (1).

2. Tête d'exploration selon la revendication 1, caractérisée en ce que le palier lisse (37; 38; 39) est constitué par une gorge de guidage (37), revêtue d'un film anti-friction, dans la partie fixe (8) du boîtier et par des ressorts à lames (38; 39) permettant la fixation d'une des tiges de guidage (34; 35) dans la gorge de guidage (37).

3. Tête d'exploration selon la revendication 1 ou 2, caractérisée en ce que pour l'exploration de modèles opaques, au moins une source de lumière (29) est fixée sur la partie de boîtier (9) susceptible de se déplacer, et cette source de lumière est orientée vers l'objectif d'exploration (11) de façon que le point d'intersection de l'axe optique (30) de cette source de lumière (29) avec l'axe optique (12) se situe dans la zone de mise au point de l'objectif d'exploration (11).

4. Tête d'exploration selon une des revendication 1 à 3, caractérisée en ce que sur la face tournée vers le support de modèles (1) de la partie de boîtier (9) susceptible de se déplacer, un miroir (23) est rapporté au-dessus de l'objectif d'exploration (11).

**Fig. 1a**

**Fig. 1b**

Fig. 2

EP 0 223 957 B1